# EUROPÄISCHE PATENTSCHRIFT

(11) **EP 3 608 028 B1**
(45) Veröffentlichungstag und Bekanntmachung des Hinweises auf die Patenterteilung: **23.12.2020**
(21) Anmeldenummer: 18187441.3
(22) Anmeldetag: 06.08.2018
(51) Int. Cl.: B05C 5/02, H01M 4/04, H01M 4/88

(54) **SCHLITZVENTIL, BESCHICHTUNGSANLAGE UND BESCHICHTUNGSVERFAHREN**
SLIT VALVE, COATING INSTALLATION AND COATING METHOD
SOUPAPE À FENTE, INSTALLATION DE REVÊTEMENT ET PROCÉDÉ DE REVÊTEMENT

(43) Veröffentlichungstag der Anmeldung: 12.02.2020
(73) Patentinhaber: VARTA Microbattery GmbH, 73479 Ellwangen Jagst (DE)
(72) Erfinder: Antis, Dieter, 73279 Ellwangen (DE); Gaugler, Andreas, 73479 Ellwangen (DE); Scheler, Thomas, 73479 Ellwangen-Rindelbach (DE)
(74) Vertreter: Patentanwaltskanzlei Cartagena

(56) Entgegenhaltungen:
- DE-A1- 19 757 238
- JP-A- 2010 253 328
- US-A1- 2006 016 391

## Beschreibung

Die Erfindung betrifft ein schaltbares Ventil für eine Beschichtungsanlage zur Steuerung der Abgabe eines pastösen Beschichtungsmaterials. Die Erfindung betrifft darüber hinaus auch eine Beschichtungsanlage mit einem schaltbaren Schlitzventil sowie ein Verfahren zum Beschichten von Oberflächen.

Aus dem Stand der Technik, beispielsweise der US 2004/0261696 A1 oder der US6174372 A, sind schaltbare Schlitzventile für Beschichtungsanlagen bekannt. Derartige Ventile weisen in einem Ventilgrundkörper eine in einer Ventilerstreckungsrichtung ausgerichtete Ventilbohrung auf, in die ein Zufuhrkanal einmündet und aus der ein Düsenkanal zur Verbindung mit einer Schlitzdüse der Beschichtungsanlage herausführt. In der Ventilbohrung eines bekannten Schlitzventils ist eine Ventilsteuerstange angeordnet, die um eine in Ventilerstreckungsrichtung erstreckte Drehachse drehbar in der Ventilbohrung gelagert ist und die von einem Ventilkanal durchsetzt ist, der über einen sich axial entlang einer Außenseite der Ventilsteuerstange erstreckten Kanaleinlass und einen ebensolchen gegenüberliegenden Kanalauslass verfügt, die über den Ventilkanal miteinander verbunden sind.

Bei diesen bekannten Schlitzventilen kann die Ventilsteuerstange zwischen einer Durchlassstellung und einer Schließstellung durch einen Motor oder pneumatisch gedreht werden. In der Durchlassstellung ist die Ventilsteuerstange derart angeordnet, dass das durch den Zufuhrkanal zugeführte Beschichtungsmaterial durch den Kanaleinlass in den Ventilkanal gelangen kann und von dort durch den Kanalauslass in den Düsenkanal, von wo es bestimmungsgemäß der Schlitzdüse der Beschichtungsanlage zugeführt wird. In der Schließstellung ist dagegen der Düsenkanal vom Zufuhrkanal durch die Ventilsteuerstange isoliert, so dass die Ausbringung von Beschichtungsmaterial unterbrochen ist.

An der Ventilsteuerstange können im Bereich zweier Außenumfangsteilflächen zwischen dem schlitzförmigen Kanaleinlass und dem schlitzförmigen Kanalauslass Lagerflächen vorgesehen sein, die zum Zwecke der Lagerung der Ventilsteuerstange an der inneren Umfangsfläche der Ventilbohrung anliegen. Dies ist beispielsweise aus der EP 2 900 388 B1 und der EP 2 900 389 B1 bekannt. Da die Ventilsteuerstange drehbar ist, verbleibt zwischen diesen Lagerflächen und der inneren Umfangsfläche der Ventilbohrung im Anlagebereich ein Lagerspalt von in der Regel maximal 100 µm.

Die bekannten Schlitzventile dienen der gezielten Steuerung des Austrags des Beschichtungsmaterials durch eine Schlitzdüse. Sie sind zu diesem Zweck der Schlitzdüse vorgeschaltet und gestatten es, durch Drehung der Ventilsteuerstange die Zufuhr des Beschichtungsmaterials zur Schlitzdüse zeitweise zu unterbrechen. Dies wird insbesondere genutzt, um alternierend Beschichtungsmaterial durch die Schlitzdüse hindurch abzugeben und die Abgabe zu unterbrechen.

Beschichtungsanlagen mit den beschriebenen Schlitzventilen finden insbesondere zur Herstellung von Batterieelektroden Verwendung. Sie dienen in diesem Kontext dem Ausbringen eines pastösen Beschichtungsmaterials, das elektrochemisch aktive Partikel wie beispielsweise Graphitpartikel enthält, in Form einer dünnen Schicht. Insbesondere kann diese Schicht als Aktivmaterialschicht unmittelbar auf einen bandförmigen Stromkollektor aufgebracht werden. Unter einer Beschichtung im Sinne der Erfindung wird jedoch auch die temporäre Aufbringung auf einem Trägersubstrat wie beispielsweise eine Walze oder ein flächiges Trägersubstrat verstanden, von dem aus bestimmungsgemäß die aus dem Beschichtungsmaterial gebildete Schicht in späteren Produktionsschritten wieder abgenommen wird, beispielsweise zur dann vorgesehenen Aufbringung auf den Stromkollektor.

Neben der Ausbringung eines Beschichtungsmaterials mit elektrochemisch wirkenden Partikeln zur Herstellung einer Batterieelektrode können derartige Beschichtungsanlagen auch Verwendung finden, um eine elektrokatalytische Schicht einer Brennstoffzelle herzustellen. In diesem Fall können insbesondere Beschichtungsmaterialien verarbeitet werden, die als elektrochemisch aktive Partikel Katalysatorpartikel (Edelmetalle, Raney-Nickel, Wolframcarbid, Molybdänsulfide, Wolframsulfide oder ähnliche geeignete Materialien) enthalten, die die kalte Verbrennung von Brennstoffen wie Wasserstoff oder Methanol katalysieren können.

Bei den beschriebenen Beschichtungsanlagen ist der Schlitzdüse üblicherweise ein Pastenreservoir vorgeschaltet, aus dem das Beschichtungsmaterial dem Schlitzventil und der nachgeschalteten Schlitzdüse zugeführt wird. Dabei sind sowohl Gestaltungen denkbar, bei denen das Pastenreservoir selbst druckbeaufschlagt ist, um das Beschichtungsmaterial in Richtung des Schlitzventils zu drücken, als auch solche Gestaltungen, bei denen ein separates motorisch betriebenes Fördermittel wie beispielsweise eine Pumpe zwischen Pastenreservoir und Schlitzventil geschaltet ist.

Die aus dem Stand der Technik, insbesondere der EP 2 900 388 B1 und der EP 2 900 389 B1, bekannten Schlitzventile weisen einen signifikanten Nachteil auf, sie sind nämlich ausgesprochen wartungsintensiv. Es kommt ganz regelmäßig vor, dass durch die Schlitzventile geführtes Beschichtungsmaterial in den erwähnten Lagerspalt eindringt. Dies ist zum einen nicht unerwünscht, da bei der Batterieelektrodenherstellung verwendete Materialien häufig Graphit und andere Bestandteile enthalten, die als Schmiermittel wirken können. Zum anderen enthalten diese Materialien allerdings regelmäßig auch Partikel mit relativ hoher Härte, beispielsweise Oxidpartikel. Diese schleifen beim Drehen der Ventilsteuerstange sowohl an der inneren Umfangsfläche der Ventilbohrung als auch an der Außenseite der Ventilsteuerstange. In der Folge kommt es zu Abnutzungen, in deren Folge ein regelmäßiges Nachschleifen der inneren Umfangsfläche der Ventilbohrung sowie ein begleitender Austausch der Ventilsteuerstange durch eine Steuerstange mit größerem Durchmesser erforderlich werden. Bereits nach dem ersten Nachschleifen handelt es sich bei dem gewarteten Schlitzventil im Grunde um ein Unikat, das eine in ihrem Durchmesser speziell angepasste Steuerstange benötigt. Dies verteuert die Batterieelektrodenherstellung erheblich.

Der vorliegenden Erfindung lag die Aufgabe zugrunde, ein Schlitzventil bereitzustellen, das eine günstigere Batterieelektrodenproduktion ermöglicht.

Diese Aufgabe wird gelöst durch das Schlitzventil mit den Merkmalen des Anspruchs 1. Weiterhin sind auch die Beschichtungsanlage gemäß Anspruch 5 sowie das Verfahren gemäß Anspruch 7 Gegenstand der Erfindung. Weiterbildungen der Erfindung sind Gegenstand von Unteransprüchen.

Bei dem erfindungsgemäßen Schlitzventil handelt es sich um ein schaltbares Schlitzventil für eine Beschichtungsanlage, das zur Steuerung der Abgabe eines pastösen Beschichtungsmaterials dient. Es zeichnetsich durch die unmittelbar folgenden Merkmale a. bis i. aus:
a. Es umfasst eine in einen Ventilgrundkörper eingebrachte und in einer Ventilerstreckungsrichtung ausgerichtete Ventilbohrung mit einer inneren Umfangsfläche.
b. Es umfasst einen im Bereich der inneren Umfangsfläche der Ventilbohrung angeordneten und in die Ventilbohrung einmündenden Zufuhrkanal.
c. Es umfasst einen im Bereich der inneren Umfangsfläche der Ventilbohrung angeordneten und aus derVentilbohrung herausführenden Düsenkanal.
d. Es umfasst eine in der Ventilbohrung angeordnete Ventilhülse mit einer inneren Umfangsfläche, die einen in Ventilerstreckungsrichtung ausgerichteten Hohlraum begrenzt, sowie einer äußeren Umfangsfläche.
e. Die Ventilhülse umfasst einen schlitzförmigen, in den Hohlraum einmündenden Hülseneinlass und einen schlitzförmigen, aus dem Hohlraum herausführenden Hülsenauslass.
f. Es umfasst eine in der Ventilbohrung angeordnete Ventilsteuerstange, die von einem Ventilkanal durchsetzt ist, der über einen schlitzförmigen Kanaleinlass und einen schlitzförmigen Kanalauslass verfügt.
g. Die Ventilhülse ist in der Ventilbohrung nicht drehbar gelagert, so dass der Zufuhrkanal über den Hülseneinlass mit dem Hohlraum verbunden und der Hohlraum über den Hülsenauslass mit dem Düsenkanal verbunden ist.
h. Die Ventilsteuerstange ist um eine in Ventilerstreckungsrichtung erstreckte Drehachse drehbar in dem Hohlraum der Ventilhülse gelagert.
i. Die Ventilsteuerstange ist in der Ventilhülse zwischen einer Durchlassstellung und einer Schließstellung drehbar, wobei in der Durchlassstellung der Zufuhrkanal und der Düsenkanal über den Ventilkanal sowie den Hülseneinlass und den Hülsenauslass kommunizierend verbunden sind und wobei in der Schließstellung der Düsenkanal vom Zufuhrkanal durch die Ventilsteuerstange isoliert ist.

Vom Stand der Technik unterscheidet sich das erfindungsgemäße Schlitzventil also dadurch, dass die Ventilsteuerstange nicht unmittelbar in der Ventilbohrung gelagert ist. Stattdessen ist zu diesem Zweck die Ventilhülse vorgesehen. Diese ist nicht drehbar in der Ventilbohrung gelagert, so dass beim Betrieb des Schlitzventils eine Abnutzung der inneren Umfangsfläche der Ventilbohrung ausgeschlossen ist. Die Abnutzung beschränkt sich stattdessen auf die innere Umfangsfläche der Ventilhülse. Da diese jedoch leicht austauschbar und vergleichsweise günstig herzustellen ist, ergibt sich aus ihrer Verwendung ein erheblicher Vorteil. Das aufwendige und teure Nachschleifen der Ventilbohrung entfällt vollständig.

Als Schlitzventil im Sinne der Erfindung wird ein Ventil verstanden, bei dem der Zufuhrkanal, der Düsenkanal, der in den Hohlraum einmündende Hülseneinlass, der aus dem Hohlraum herausführende Hülsenauslass sowie der die Ventilsteuerstange durchsetzende Ventilkanal in einer Dimension quer zur Förderrichtung eine deutlich größere Erstreckung aufweist als in der hierzu orthogonalen und ebenfalls quer zur Förderrichtung erstreckten Dimension. Die Erstreckung der jeweiligen Kanäle in Ventilerstreckungsrichtung ist gemäß der Definition eines Schlitzventils gemäß dieser Erfindung zumindest um Faktor 4 größer als die Erstreckung quer zur Ventilerstreckungsrichtung. Bezüglich der Ventilsteuerstange ist vorgesehen, dass diese eine Länge in Ventilerstreckungsrichtung aufweist, entlang derer sie vom Ventilkanal durchsetzt ist, die mindestens vier Mal so groß ist wie der mittlere Radius der Ventilsteuerstange. Vorzugsweise und zumeist ist die Länge der Ventilsteuerstange, entlang derer sie vom Ventilkanal durchsetzt ist, um einen größeren Faktor größer als der maximale Durchmesser der Ventilsteuerstange, vorzugsweise mindestens um Faktor 10.

Bei dem Ventilgrundkörper handelt es sich vorzugsweise um einen metallischen Grundkörper, in den die Ventilbohrung beispielsweise mittels spanender Bearbeitung eingebracht ist. Bei der Ventilbohrung selbst handelt es sich um eine rotationssymmetrische und vorzugsweise zylindrische Ausnehmung, deren Länge mindestens vier Mal so groß wie der mittlere Radius ist.

Die Ventilbohrung ist bevorzugt zylindrisch ausgebildet. Dies muss allerdings keineswegs zwingend so sein. Grundsätzlich könnte sie z.B. auch einen rechteckigen Querschnitt aufweisen. Wichtig ist lediglich, dass die Ventilhülse derart in ihr gelagert werden kann, dass der Zufuhrkanal über den Hülseneinlass mit dem Hohlraum verbunden und der Hohlraum über den Hülsenauslass mit dem Düsenkanal verbunden ist. Zu diesem Zweck könnte die Ventilhülse beispielsweise einen rechteckigen Außenquerschnitt aufweisen.

In die Ventilbohrung mündet der Zufuhrkanal, und aus der Ventilbohrung geht der Düsenkanal ab, wobei beide Kanäle durch schlitzartige Öffnungen, die sich primär in Ventilerstreckungsrichtung erstrecken, mit der Ventilbohrung verbunden sind. Die absolute Länge der Ventilbohrung sowie die im Wesentlichen identische Breite des Zufuhrkanals und des Düsenkanals im Bereich der Umfangsfläche der Ventilbohrung sowie des Ventilkanals betragen mindestens 30 mm, vorzugsweise mindestens 100 mm. Je nach Anwendungszweck kann die Länge der Bohrung bzw. die Breite der jeweiligen Kanäle bis zu 2.000 mm und mehr betragen. Der mittlere Durchmesser der Ventilbohrung, insbesondere der Durchmesser der zylindrischen Ventilbohrung, ist vorzugsweise < 30 mm. Die Breite der Einmündung des Zufuhrkanals und des Ausgangs in den Düsenkanal beträgt vorzugsweise mindestens das Vierfache der Höhe der Einmündung bzw. des Ausgangs.

Zumindest der Hohlraum der Ventilhülse ist bevorzugt zylindrisch ausgebildet. In weiter bevorzugten Ausführungsformen ist die Ventilhülse insgesamt zylindrisch ausgebildet. Die Dimensionen des Hohlraums sind an den Durchmesser und die Länge der Ventilsteuerstange angepasst. Die Dimensionen des schlitzförmigen, in den Hohlraum einmündenden Hülseneinlasses und des schlitzförmigen, aus dem Hohlraum herausführenden Hülsenauslasses entsprechen bevorzugt den Dimensionen der schlitzartige Öffnungen, über die der Zufuhrkanal und der Düsenkanal mit der Ventilbohrung verbunden sind. Wenn die Ventilhülse zylindrisch ausgebildet ist, so beträgt ihr Wanddurchmesser bevorzugt zwischen 1 mm und 10 mm.

Zur Herstellung einer Ventilsteuerstange eines erfindungsgemäßen schaltbaren Schlitzventils bietet es sich an, diese Ventilsteuerstange dahingehend einstückig zu fertigen, dass alle Außenflächen und die den Ventilkanal definierenden Wandungen einstückig miteinander verbunden sind. Insbesondere bietet es sich an, ausgehend von einem zylindrischen Rohling den schlitzförmigen Ventilkanal einzubringen.

Zur Herstellung einer Ventilhülse eines erfindungsgemäßen schaltbaren Schlitzventils bietet es sich an, diese Ventilhülse dahingehend einstückig zu fertigen, dass alle Außenflächen und die den Hohlraum definierende inneren Umfangsfläche einstückig miteinander verbunden sind. Insbesondere bietet es sich an, ausgehend von einem zylindrischen Rohling zunächst den zylindrischen Hohlraum einzubringen und anschließend in die Wandungen des entstandenen Hohlzylinders den schlitzförmigen, in den Hohlraum einmündenden Hülseneinlass und den schlitzförmigen, aus dem Hohlraum herausführenden Hülsenauslass einzubringen.

In einer ersten, besonders bevorzugten Weiterbildung der Erfindung zeichnet sich das erfindungsgemäße Schlitzventil durch die unmittelbarfolgenden Merkmale a. und b. aus:
a. Die Ventilsteuerstange ist zylindrisch ausgebildet und umfasst eine äußere Umfangsfläche, die lediglich von dem schlitzförmigen Kanaleinlass und dem schlitzförmigen Kanalauslass durchbrochen ist.
b. Die äußere Umfangsfläche der Ventilsteuerstange liegt unmittelbar an der inneren Umfangsfläche derVentilhülse an.

Aus der EP 2 900 388 B1 ist es bekannt, Außenumfangsflächen derVentilsteuerstange mit Vertiefungsbereichen zu versehen. Dies ist vorliegend nicht zwingend erforderlich. Vielmehr ist gemäß dieser ersten, besonders bevorzugten Weiterbildung der Erfindung das genaue Gegenteil vorgesehen, nämlich der Einsatz einer Ventilsteuerstange ohne solche Vertiefungsbereiche. Bevorzugt ist die Ventilsteuerstange somit streng zylindrisch ausgebildet und frei von Vertiefungsbereichen, in denen die Ventilsteuerstange nicht an der inneren Umfangsfläche derVentilhülse anliegt. Gemäß der ersten bevorzugten Weiterbildung agiert die äußere Umfangsfläche derVentilsteuerstange als Ganzes als Lagerfläche, die in unmittelbarem Kontakt mit der inneren Umfangsfläche derVentilhülse steht.

In einer zweiten, besonders bevorzugten Weiterbildung der Erfindung ist die Ventilsteuerstange hingegen ausgebildet wie in der EP 2 900 388 B1 beschrieben. In dieser Ausführungsform zeichnet sich das erfindungsgemäße Schlitzventil durch die unmittelbar folgenden Merkmale a. bis c. aus:
a. Die Ventilsteuerstange umfasst eine äußere Umfangsfläche, die von dem schlitzförmigen Kanaleinlass und dem schlitzförmigen Kanalauslass durchbrochen ist.
b. An der Ventilsteuerstange sind im Bereich zweier Teilflächen der Außenumfangsfläche zwischen dem schlitzförmigen Kanaleinlass und dem schlitzförmigen Kanalauslass Lagerflächen vorgesehen, die zum Zwecke der Lagerung der Ventilsteuerstange an der inneren Umfangsfläche derVentilhülse anliegen.
c. An den Außenumfangsteilflächen sind Vertiefungsbereiche vorgesehen, im Bereich derer die jeweilige Außenumfangsteilfläche nicht an der inneren Umfangsfläche der Ventilhülse anliegt.

Die Teilflächen der Außenumfangsfläche im Sinne der Erfindung sind die beiden Teilflächen, die sich in Umfangsrichtung und entgegen der Umfangsrichtung vom Kanaleinlass zum Kanalauslass des Ventilkanals erstrecken. Die Breite der Außenumfangsteilflächen im Sinne der Erfindung entspricht der maximalen Breite des Ventilkanals in Ventilerstreckungsrichtung.

Während die äußere Umfangsfläche der Ventilsteuerstange derart an die Ventilhülse angepasst ist, dass sie gegenüber deren rotationssymmetrischer Umfangsinnenfläche eine Beabstandung von weniger als 100 µm aufweisen, ist der Abstand in den Vertiefungsbereichen größer. Als Vertiefungsbereich im Sinne der Erfindung wird ein Bereich verstanden, bei dem der Abstand mindestens 0,5 mm beträgt.

Die äußere Umfangsfläche der Ventilsteuerstange eines erfindungsgemäßen Schlitzventils unterteilt sich somit bevorzugt in Lagerflächen und Vertiefungsbereiche. Die Lagerflächen und die Vertiefungsbereiche können hierbei auf viele verschiedene Arten verteilt sein.

In einer dritten, besonders bevorzugten Weiterbildung der Erfindung zeichnet sich das erfindungsgemäße Schlitzventil durch die unmittelbarfolgenden Merkmale a. bis c. aus:
a. Die Ventilsteuerstange umfasst eine äußere Umfangsfläche, die lediglich von dem schlitzförmigen Kanaleinlass und dem schlitzförmigen Kanalauslass durchbrochen ist.
b. Die äußere Umfangsfläche der Ventilsteuerstange liegt bereichsweise unmittelbar an der inneren Umfangsfläche der Ventilhülse an.
c. Die innere Umfangsfläche der Ventilhülse umfasst mindestens einen vertieften Teilbereich, in dem die äußere Umfangsfläche der Ventilsteuerstange nicht an der inneren Umfangsfläche der Ventilhülse anliegt.

Während bei den aus der EP 2 900 388 B1 bekannten Schlitzventilen die Außenumfangsflächen der Ventilsteuerstange mit Vertiefungsbereichen versehen sind, ist es hier die innere Umfangsfläche der Ventilhülse.

Die Erfindung betrifft weiterhin auch eine Beschichtungsanlage zum Beschichten von Oberflächen in einem kontinuierlichen Verfahren mit einem pastösen Beschichtungsmaterial. Diese zeichnet sich durch die unmittelbar folgenden Merkmale a. bis d. aus:
a. Sie umfasst ein schaltbares Schlitzventil.
b. Sie umfasst eine Zufuhreinrichtung zur Zuführung des Beschichtungsmaterials zu dem Schlitzventil.
c. Sie umfasst eine sich an das Schlitzventil anschließende Schlitzdüse zur Ausbringung des Beschichtungsmaterials auf die damit zu beschichtende Oberfläche.
d. Das Schlitzventil ist ausgebildet wie oben beschrieben.

Bei einer solchen erfindungsgemäßen Beschichtungsanlage umfasst die Zufuhreinrichtung vorzugsweise einen Pastenspeicher, in dem eine zur Batterieherstellung geeignetes Beschichtungsmaterial vorgehalten wird, also insbesondere ein Beschichtungsmaterial mit elektrochemisch aktiven Partikeln, die zur Herstellung einer Batterieelektrode dienen können.

Die Erfindung betrifft weiterhin auch ein Verfahren zur Beschichtung einer Oberfläche, bei dem die beschriebene Beschichtungsanlage Verwendung findet. Es handelt sich vorzugsweise um ein Verfahren zur Abgabe eines eine Batterieelektrode bildenden Beschichtungsmaterials.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei illustrieren:
Figur 1 eine Ausführungsform einer Ventilhülse eines erfindungsgemäßen Schlitzventils,
Figur 2 eine Ausführungsform einer Ventilsteuerstange eines erfindungsgemäßen Schlitzventils,
Figur3 die in Fig. 1 dargestellte Ventilhülse mit eingeschobener Ventilsteuerstange gemäß Fig. 2,
Figur 4 eine Ausführungsform einer erfindungsgemäßen Beschichtungsanlage mit einem erfindungsgemäßen Schlitzventil und
Fig. 5 einen auszugsweisen Querschnitt durch das in Fig. 4 dargestellte Schlitzventil.

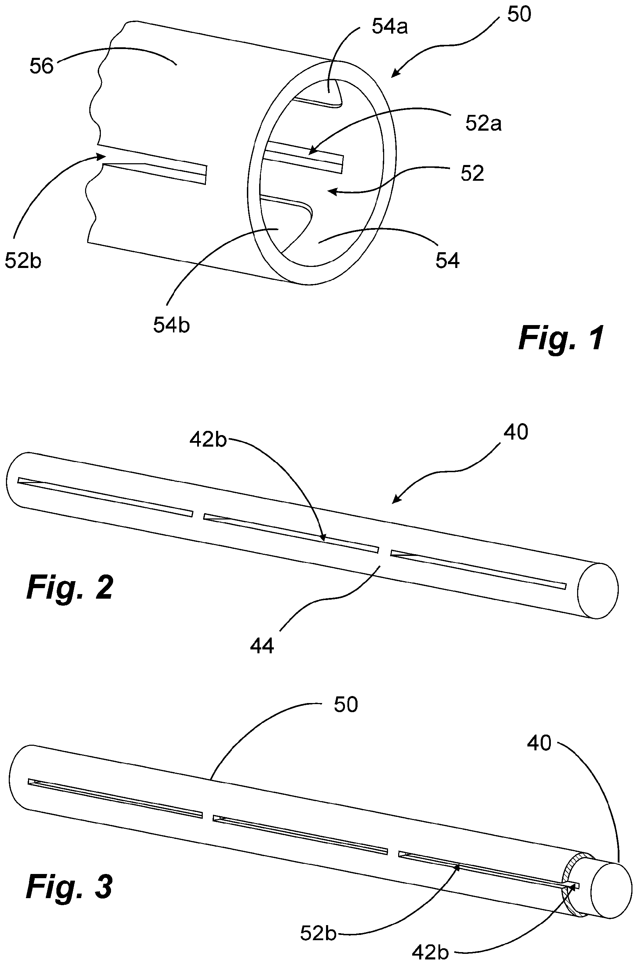

Fig. 1 zeigt ein Endstück einer Ausführungsform einer Ventilhülse 50 eines erfindungsgemäßen Schlitzventils. Die Ventilhülse 50 ist hohlzylindrisch ausgebildet und umfasst eine innere Umfangsfläche 54, die einen axial ausgerichteten Hohlraum 52 begrenzt, sowie eine äußeren Umfangsfläche 56. Durchbrochen wird die Wandung der Ventilhülse 50 lediglich durch den schlitzförmigen, in den Hohlraum einmündenden Hülseneinlass 52a und den schlitzförmigen, aus dem Hohlraum herausführenden Hülsenauslass 52b.

Die innere Umfangsfläche 54 der Ventilhülse 50 umfasst die vertieften Teilbereiche 54a und 54b. Wenn in den Hohlraum 52 etwa die in Fig. 2 dargestellte zylindrische Ventilsteuerstange 40 eingeschoben wird, so liegt in diesen Teilbereichen die äußere Umfangsfläche 44 der Ventilsteuerstange 40 nicht an der inneren Umfangsfläche 54 der Ventilhülse 50 an. In vielen Ausführungsformen des erfindungsgemäßen Schlitzventils wird auf die vertieften Teilbereiche allerdings verzichtet. Das Einbringen der Vertiefungen ist sehr aufwendig.

Fig. 2 zeigt eine Ausführungsform einer Ventilsteuerstange 40 eines erfindungsgemäßen Schlitzventils. Die Ventilsteuerstange 40 ist von dem Ventilkanal 42 durchsetzt, der über einen schlitzförmigen Kanaleinlass 42a (auf der hier nicht sichtbaren Rückseite der Ventilsteuerstange 40) und einen schlitzförmigen Kanalauslass 42b verfügt,

Fig. 3 zeigt die in Fig. 1 dargestellte Ventilhülse 50 sowie die in Fig. 2 dargestellte Ventilsteuerstange 40, wobei letztere in den Hohlraum 52 eingeschoben und auf Durchlassstellung gedreht ist. In dieser Stellung sind der Hülseneinlass (52a) und den Hülsenauslass (52b) über den Ventilkanal (42) kommunizierend miteinander verbunden.

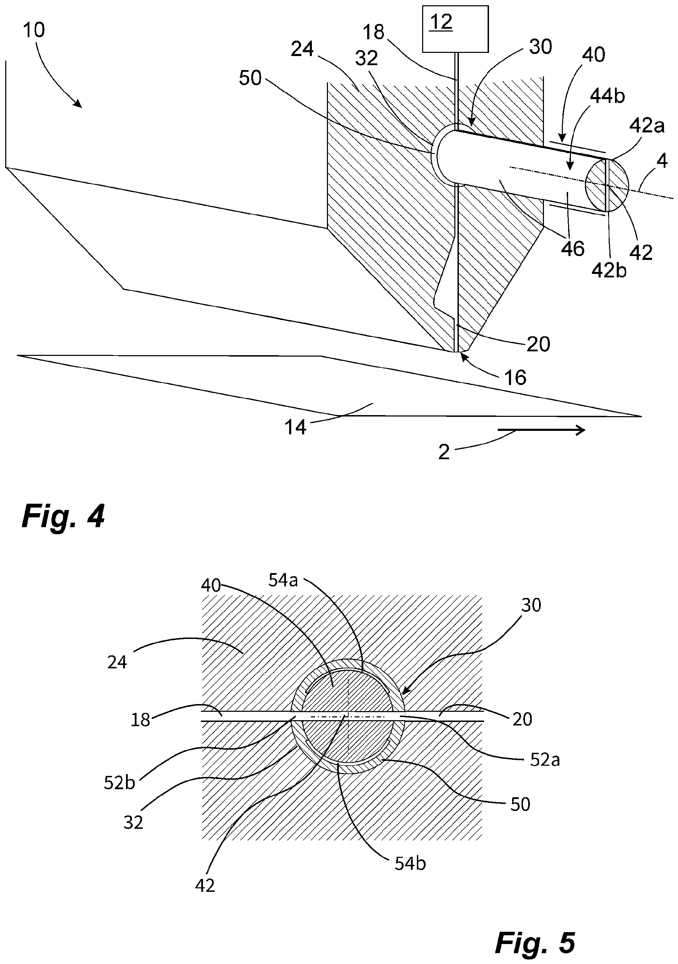

Fig. 4 zeigt eine Ausführungsform einer erfindungsgemäßen Beschichtungsanlage 10. Diese Beschichtungsanlage dient dem Zweck, ein Beschichtungsmaterial aus einem Pastenreservoir 12 auf einem Substrat 14 aufzutragen, welches während des Beschichtungsvorgangs kontinuierlich in Richtung des Pfeils 2 bewegt wird. Zu diesem Zweck ist eine schlitzförmige Düse 16 vorgesehen, durch die hindurch das Beschichtungsmaterial auf das Substrat 14 in Form eines breiten Beschichtungsfilms aufgebracht werden kann. Zwischen dem Pastenreservoir 12 und der Schlitzdüse 16 ist ein Schlitzventil 30 vorgesehen, welches dem Zweck dient, die Zufuhr von Beschichtungsmaterial zur Schlitzdüse 16 im Wechsel zuzulassen und zu unterbrechen.

Das Schlitzventil 30 verfügt über eine Ventilbohrung 32, die in einen Grundkörper 24 eingebracht ist und die vorliegend als zylindrische Bohrung ausgebildet ist. In diese Bohrung mündet ein Zufuhrkanal 18, der unter Druck stehendes Beschichtungsmaterial aus dem Pastenreservoir 12 dem Schlitzventil 30 zuführt. Auf der gegenüberliegenden Seite der Ventilbohrung 32 ist die Ventilbohrung 32 durch einen schlitzförmigen Ausgang mit einem zur Schlitzdüse 16 führenden Düsenkanal 20 verbunden.

In die sich in Ventilerstreckungsrichtung 4 erstreckende Ventilbohrung ist eine Ventilhülse 50 wie die in Fig. 1 dargestellte drehfest eingesetzt. In die Ventilhülse 50 ist die in Fig. 2 dargestellte Ventilsteuerstange 40 eingeschoben, die um eine in Ventilerstreckungsrichtung 4 ausgerichtete Drehachse 4 drehbeweglich ist. Abhängig von der Drehstellung der Ventilsteuerstange 40 innerhalb der Ventilbohrung 32 wird der Zustrom von Beschichtungsmaterial zur Schlitzdüse 16 gestattet bzw. unterbrochen.

Fig. 5 zeigt einen auszugsweisen Querschnitt durch das in Fig. 4 dargestellte Schlitzventil 30. Das Schlitzventil 30 steht hier in Durchlassstellung. Dabei sind der Zufuhrkanal (18) und der Düsenkanal (20) über den Ventilkanal (42) sowie den Hülseneinlass (52a) und den Hülsenauslass (52b) kommunizierend verbunden.

## Patentansprüche

1. Schaltbares Schlitzventil (30) für eine Beschichtungsanlage (10) zur Steuerung der Abgabe eines pastösen Beschichtungsmaterials mit den Merkmalen
a. es umfasst eine in einen Ventilgrundkörper (24) eingebrachte und in einer Ventilerstreckungsrichtung (4) ausgerichtete Ventilbohrung (32) mit einer inneren Umfangsfläche (34),
b. es umfasst einen im Bereich der inneren Umfangsfläche (34) der Ventilbohrung (32) angeordneten und in die Ventilbohrung (32) einmündenden Zufuhrkanal (18),
c. es umfasst einen im Bereich der inneren Umfangsfläche (34) der Ventilbohrung (32) angeordneten und aus der Ventilbohrung (32) herausführenden Düsenkanal (20),
d. es umfasst eine in der Ventilbohrung (32) angeordnete Ventilhülse (50) mit einer inneren Umfangsfläche (54), die einen in Ventilerstreckungsrichtung (4) ausgerichteten Hohlraum (52) begrenzt, sowie einer äußeren Umfangsfläche (56),
e. die Ventilhülse (50) umfasst einen schlitzförmigen, in den Hohlraum einmündenden Hülseneinlass (52a) und einen schlitzförmigen, aus dem Hohlraum herausführenden Hülsenauslass (52b),
f. es umfasst eine in der Ventilbohrung (32) angeordnete Ventilsteuerstange (40), die von einem Ventilkanal (42) durchsetzt ist, der über einen schlitzförmigen Kanaleinlass (42a) und einen schlitzförmigen Kanalauslass (42b) verfügt,
wobei
g. die Ventilhülse (50) in der Ventilbohrung (32) nicht drehbar gelagert ist, so dass der Zufuhrkanal (18) über den Hülseneinlass (52a) mit dem Hohlraum (52) verbunden und der Hohlraum (52) über den Hülsenauslass (52b) mit dem Düsenkanal (20) verbunden ist,
h. die Ventilsteuerstange (40) um eine in Ventilerstreckungsrichtung (4) erstreckte Drehachse (4) drehbar in dem Hohlraum (52) der Ventilhülse (50) gelagert ist,
i. die Ventilsteuerstange (40) in der Ventilhülse (50) zwischen einer Durchlassstellung und einer Schließstellung drehbar ist, wobei in der Durchlassstellung der Zufuhrkanal (18) und der Düsenkanal (20) über den Ventilkanal (42) sowie den Hülseneinlass (52a) und den Hülsenauslass (52b) kommunizierend verbunden sind und wobei in der Schließstellung der Düsenkanal (20) vom Zufuhrkanal (18) durch die Ventilsteuerstange (40) isoliert ist.

2. Schaltbares Schlitzventil nach Anspruch 1 mit den folgenden zusätzlichen Merkmalen:
a. Die Ventilsteuerstange (40) ist zylindrisch ausgebildet und umfasst eine äußere Umfangsfläche (44), die lediglich von dem schlitzförmigen Kanaleinlass (42a) und dem schlitzförmigen Kanalauslass (42b) durchbrochen ist.
b. Die äußere Umfangsfläche (44) der Ventilsteuerstange (40) liegt unmittelbar an der inneren Umfangsfläche (54) der Ventilhülse (50) an.

3. Schaltbares Schlitzventil nach Anspruch 1 mit den folgenden zusätzlichen Merkmalen:
a. Die Ventilsteuerstange (40) umfasst eine äußere Umfangsfläche (44), die von dem schlitzförmigen Kanaleinlass (42a) und dem schlitzförmigen Kanalauslass (42b) durchbrochen ist.
b. An der Ventilsteuerstange (40) sind im Bereich zweier Teilflächen (44a, 44b) der Außenumfangsfläche (44) zwischen dem schlitzförmigen Kanaleinlass und dem schlitzförmigen Kanalauslass Lagerflächen (48a, 48b) vorgesehen, die zum Zwecke der Lagerung der Ventilsteuerstange an der inneren Umfangsfläche (54) der Ventilhülse (50) anliegen.
c. An den Außenumfangsteilflächen (44a, 44b) sind Vertiefungsbereiche (46) vorgesehen, im Bereich derer die jeweilige Außenumfangsteilfläche (44a, 44b) nicht an der inneren Umfangsfläche (54) der Ventilhülse (50) anliegt.

4. Schaltbares Schlitzventil nach Anspruch 1 mit den folgenden zusätzlichen Merkmalen:
a. Die Ventilsteuerstange (40) umfasst eine äußere Umfangsfläche (44), die lediglich von dem schlitzförmigen Kanaleinlass (42a) und dem schlitzförmigen Kanalauslass (42b) durchbrochen ist.
b. Die äußere Umfangsfläche (44) der Ventilsteuerstange (40) liegt bereichsweise unmittelbar an der inneren Umfangsfläche (54) der Ventilhülse (50) an.
c. Die innere Umfangsfläche (54) der Ventilhülse (50) umfasst mindestens einen vertieften Teilbereich (54a, 54b), in dem die äußere Umfangsfläche (44) der Ventilsteuerstange (40) nicht an der inneren Umfangsfläche (54) der Ventilhülse (50) anliegt.

5. Beschichtungsanlage (10) zum Beschichten von Oberflächen (14) in einem kontinuierlichen Verfahren mit einem pastösen Beschichtungsmaterial mit den Merkmalen
a. sie umfasst ein schaltbares Schlitzventil (30),
b. sie umfasst eine Zufuhreinrichtung (12, 18) zur Zuführung des Beschichtungsmaterials zu dem Schlitzventil (30),
c. sie umfasst eine sich an das Schlitzventil (30) anschließende Schlitzdüse (16) zur Ausbringung des Beschichtungsmaterials auf die damit zu beschichtende Oberfläche (14), und
d. das Schlitzventil (30) ist nach einem der vorstehenden Ansprüche ausgebildet.

6. Beschichtungsanlage nach Anspruch 5 mit dem folgenden zusätzlichen Merkmal:
a. die Zufuhreinrichtung (12, 18) umfasst einen Pastenspeicher (12), in dem ein Beschichtungsmaterial zur Herstellung von Batterien vorgehalten wird.

7. Verfahren zur Ausbringung eines Beschichtungsmaterials auf einer Oberfläche, wobei das Beschichtungsmaterial mittels einer Beschichtungsanlage (10) nach einem der Ansprüche 5 oder 6 ausgebracht wird.

## Claims

1. Switchable slotted valve (30) for a coating installation (10) for controlling the dispensing of a pasty coating material, having the following features:
a. it comprises a valve bore (32) which is incorporated into a valve basic body (24) and which is oriented in a valve direction of extent (4) and which has an inner circumferential surface (34),
b. it comprises a feed duct (18) which is arranged in the region of the inner circumferential surface (34) of the valve bore (32) and which opens into the valve bore (32),
c. it comprises a nozzle duct (20) which is arranged in the region of the inner circumferential surface (34) of the valve bore (32) and which leads out from the valve bore (32),
d. it comprises a valve sleeve (50) which is arranged in the valve bore (32) and which has an inner circumferential surface (54), which delimits a cavity (52) oriented in the valve direction of extent (4), and an outer circumferential surface (56),
e. the valve sleeve (50) comprises a slot-shaped sleeve inlet (52a) which opens into the cavity and a slot-shaped sleeve outlet (52b) which leads out from the cavity,
f. it comprises a valve control rod (40) which is arranged in the valve bore (32), and which is traversed by a valve duct (42) which has a slot-shaped duct inlet (42a) and a slot-shaped duct outlet (42b),
wherein
g. the valve sleeve (50) is non-rotatably mounted in the valve bore (32), with the result that the feed duct (18) is connected to the cavity (52) via the sleeve inlet (52a), and the cavity (52) is connected to the nozzle duct (20) via the sleeve outlet (52b),
h. the valve control rod (40) is mounted in the cavity (52) of the valve sleeve (50) so as to be rotatable about an axis of rotation (4) extending in the valve direction of extent (4),
i. the valve control rod (40) is rotatable in the valve sleeve (50) between a passage position and a closed position, wherein, in the passage position, the feed duct (18) and the nozzle duct (20) are communicatively connected via the valve duct (42) and the sleeve inlet (52a) and the sleeve outlet (52b), and wherein, in the closed position, the nozzle duct (20) is isolated from the feed duct (18) by the valve control rod (40).

2. Switchable slotted valve according to Claim 1, having the following additional features:
a. The valve control rod (40) is cylindrical and comprises an outer circumferential surface (44) which is breached only by the slot-shaped duct inlet (42a) and the slot-shaped duct outlet (42b).
b. The outer circumferential surface (44) of the valve control rod (40) lies directly against the inner circumferential surface (54) of the valve sleeve (50).

3. Switchable slotted valve according to Claim 1, having the following additional features:
a. The valve control rod (40) comprises an outer circumferential surface (44) which is breached by the slot-shaped duct inlet (42a) and the slot-shaped duct outlet (42b).
b. Bearing surfaces (48a, 48b), which, for the purpose of bearing of the valve control rod, lie against the inner circumferential surface (54) of the valve sleeve (50), are provided on the valve control rod (40) in the region of two partial surfaces (44a, 44b) of the outer circumferential surface (44) between the slot-shaped duct inlet and the slot-shaped duct outlet.
c. Depression regions (46) are provided on the outer circumferential partial surfaces (44a, 44b), in the region of which depression regions the respective outer circumferential partial surface (44a, 44b) does not lie against the inner circumferential surface (54) of the valve sleeve (50).

4. Switchable slotted valve according to Claim 1, having the following additional features:
a. The valve control rod (40) comprises an outer circumferential surface (44) which is breached only by the slot-shaped duct inlet (42a) and the slot-shaped duct outlet (42b).
b. The outer circumferential surface (44) of the valve control rod (40) lies in certain regions directly against the inner circumferential surface (54) of the valve sleeve (50).
c. The inner circumferential surface (54) of the valve sleeve (50) comprises at least one depressed subregion (54a, 54b) in which the outer circumferential surface (44) of the valve control rod (40) does not lie against the inner circumferential surface (54) of the valve sleeve (50).

5. Coating installation (10) for coating surfaces (14) in a continuous method with a pasty coating material, having the following features:
a. it comprises a switchable slotted valve (30),
b. it comprises a feed device (12, 18) for feeding the coating material to the slotted valve (30),
c. it comprises a slotted nozzle (16) adjoining the slotted valve (30) and intended for dispensing the coating material onto the surface (14) to be coated therewith, and
d. the slotted valve (30) is formed according to one of the preceding claims.

6. Coating installation according to Claim 5, having the following additional feature:
a. the feed device (12, 18) comprises a paste store (12) in which a coating material for producing batteries is held available.

7. Method for dispensing a coating material on a surface, wherein the coating material is dispensed by means of a coating installation (10) according to either of Claims 5 and 6.

## Revendications

1. Vanne à fente commutable (30) destinée à une installation de revêtement (10) pour commander la distribution d'un matériau de revêtement pâteux, ladite vanne comportant les caractéristiques suivantes
a. elle comprend un alésage de vanne (32) qui est ménagé dans un corps de base de vanne (24), qui est orienté dans une direction d'extension de vanne (4) et qui comporte une surface périphérique intérieure (34),
b. elle comprend un conduit d'alimentation (18) ménagé dans la région de la surface périphérique intérieure (34) de l'alésage de vanne (32) et qui débouche dans l'alésage de vanne (32),
c. elle comprend un conduit de buse (20) ménagé dans la région de la surface périphérique intérieure (34) de l'alésage de vanne (32) et qui sort de l'alésage de vanne (32),
d. elle comprend un manchon de vanne (50) disposé dans l'alésage de vanne (32) et comportant une surface périphérique intérieure (54) qui délimite une cavité (52) orientée dans la direction d'extension de vanne (4), et une surface périphérique extérieure (56),
e. le manchon de vanne (50) comprend une entrée de manchon (52a) en forme de fente débouchant dans la cavité et une sortie de manchon (52b) en forme de fente sortant de la cavité,
f. elle comprend une tige de commande de vanne (40) qui est disposée dans l'alésage de vanne (32), qui est traversée par un conduit de vanne (42) et qui dispose d'une entrée de conduit (42a) en forme de fente et d'une sortie de conduit (42b) en forme de fente,
g. le manchon de vanne (50) n'est pas monté à rotation dans l'alésage de vanne (32) de sorte que le conduit d'alimentation (18) soit relié à la cavité (52) par le biais de l'entrée de manchon (52a) et que la cavité (52) soit reliée au conduit de buse (20) par le biais de la sortie de manchon (52b),
h. la tige de commande de vanne (40) est montée dans la cavité (52) du manchon de vanne (50) de manière à pouvoir tourner sur un axe de rotation (4) s'étendant dans la direction de l'extension de vanne (4),
i. la tige de commande de vanne (40) peut tourner dans le manchon de vanne (50) entre une position passante et une position fermée, le conduit d'alimentation (18) et le conduit de buse (20) étant reliés dans la position ouverte de manière communicante par le biais du conduit de vanne (42) et de l'entrée de manchon (52a) et de la sortie de manchon (52b) et le conduit de buse (20) étant isolé, dans la position fermée, du conduit d'alimentation (18) par le biais de la tige de commande de vanne (40).

2. Vanne à fente commutable selon la revendication 1 présentant les caractéristiques supplémentaires suivantes :
a. la tige de commande de vanne (40) est cylindrique et comporte une surface périphérique extérieure (44) qui n'est traversée que par l'entrée de conduit (42a) en forme de fente et la sortie de conduit (42b) en forme de fente.
b. la surface périphérique extérieure (44) de la tige de commande de vanne (40) est en appui directement sur la surface périphérique intérieure (54) du manchon de vanne (50).

3. Vanne à fente commutable selon la revendication 1 présentant les caractéristiques supplémentaires suivantes :
a. la tige de commande de vanne (40) comporte une surface périphérique extérieure (44) qui est traversée par l'entrée de conduit (42a) en forme de fente et la sortie de conduit (42b) en forme de fente.
b. des surfaces d'appui (48a, 48b) sont prévues au niveau de la tige de commande de vanne (40) dans la région de deux parties de surface (44a, 44b) de la surface périphérique extérieure (44) entre l'entrée de conduit en forme de fente et la sortie de conduit en forme de fente, lesquelles surfaces d'appui étant en appui sur la surface périphérique intérieure (54) du manchon de vanne (50) afin d'accommoder la tige de commande de vanne.
c. des régions en creux (46) sont prévues au niveau des parties de surface périphériques extérieures (44a, 44b), régions au niveau desquelles la partie de surface périphérique extérieure respective (44a, 44b) n'est pas en appui sur la surface périphérique intérieure (54) du manchon de vanne (50).

4. Vanne à fente commutable selon la revendication 1 présentant les caractéristiques supplémentaires suivantes :
a. la tige de commande de vanne (40) comporte une surface périphérique extérieure (44) qui n'est traversée que par l'entrée de conduit (42a) en forme de fente et la sortie de conduit (42b) en forme de fente,
b. la surface périphérique extérieure (44) de la tige de commande de vanne (40) est en appui par endroits directement sur la surface périphérique intérieure (54) du manchon de vanne (50).
c. la surface périphérique intérieure (54) du manchon de vanne (50) comprend au moins une partie évidée (54a, 54b) dans laquelle la surface périphérique extérieure (44) de la tige de commande de vanne (40) n'est pas en appui sur la surface périphérique intérieure (54) du manchon de vanne (50).

5. Installation de revêtement (10) destinée au revêtement de surfaces (14) dans un procédé continu avec un matériau de revêtement pâteux, ladite installation présentant les caractéristiques suivantes :
a. elle comprend une vanne à fente commutable (30),
b. elle comprend un dispositif d'alimentation (12, 18) destiné à amener le matériau de revêtement à la vanne à fente (30),
c. elle comprend une buse à fente (16) reliée à la vanne à fente (30) et destinée à appliquer le matériau de revêtement sur la surface (14) à revêtir avec celui-ci, et
d. la vanne à fente (30) est conçue selon l'une des revendications précédentes.

6. Installation de revêtement selon la revendication 5 présentant la caractéristique supplémentaire suivante :
a. le dispositif d'alimentation (12, 18) comprend un réservoir de pâte (12) dans lequel est stocké un matériau de revêtement destiné à la fabrication de batteries.

7. Procédé d'application d'un matériau de revêtement sur une surface, le matériau de revêtement étant appliqué au moyen d'une installation de revêtement (10) selon l'une des revendications 5 et 6.
